# EUROPEAN PATENT SPECIFICATION

(11) **EP 2 003 874 B1**
(45) Date of publication and mention of the grant of the patent: **29.12.2010**
(21) Application number: 07715202.3
(22) Date of filing: 05.03.2007
(51) Int. Cl.: H04N 5/00, H04N 5/44

(54) **IMAGE PROVIDING APPARATUS, IMAGE DISPLAY APPARATUS, AND IMAGE DISPLAY SYSTEM CONSTITUTED BY THE SAME**
BILDBEREITSTELLUNGSVORRICHTUNG, BILDANZEIGEVORRICHTUNG UND DADURCH DARGESTELLTES BILDANZEIGESYSTEM
APPAREILS DE FOURNITURE ET D'AFFICHAGE D'IMAGE ET SYSTEME D'AFFICHAGE D'IMAGE CONSTITUE PAR CEUX-CI

(30) Priority: 31.03.2006 JP 2006098782
(43) Date of publication of application: 17.12.2008
(73) Proprietor: Panasonic Corporation, Kadoma-shi Osaka 571-8501 (JP)
(72) Inventor: HATTORI, Yoshikatsu c/o Matsushita Electric Industrial Co., Ltd. I.P.R.O.C, Chuo-Ku Osaka 540-6207 (JP)
(74) Representative: Gassner, Wolfgang
(86) International application number: PCT/JP2007/054175
(87) International publication number: WO 2007/113966

(56) References cited:
- GB-A- 2 389 980
- JP-A- 2002 247 479
- JP-A- 2005 223 443
- JP-A- 2005 303 678

## Description

### TECHNICAL FIELD

The present invention relates to an image display system, and particularly to an image display system capable of sufficiently reducing the electricity consumed by an image providing apparatus when power to the image providing apparatus is off.

### BACKGROUND ART

Conventionally, an image display system separately including a tuner for receiving image data of television broadcasting and the like and a display section of liquid crystal and the like is known (see Patent Document 1 and Patent Document 2 for example). Specifically, the conventional image display system includes an image providing apparatus that has a wireless communication section for performing wireless communication using radio waves and a tuner, and also includes an image display apparatus, such as a television receiver, that has a wireless communication section and a display section. Image data (e.g., television broadcasting data or video data received from an external device connected to the image providing apparatus) received by the tuner is provided by the image providing apparatus via the wireless communication section thereof to the image display apparatus. The image display apparatus receives, by the wireless communication section thereof, the image data provided by the image providing apparatus and displays an image corresponding to the image data in the display section.

Here, the problem of an image display system separately including devices such as an image providing apparatus and an image display apparatus is how to reduce the electricity consumed by the image providing apparatus when power to the image display apparatus is off. In response, conventionally, control using wireless communication is performed between the image providing apparatus and the image display apparatus, such that power on/off to the image display apparatus operates in tandem with power on/off to the image providing apparatus. Consequently, when power to the image display apparatus is turned off, power to the image providing apparatus is also turned off, and thus it is possible to reduce the electricity consumed by the image providing apparatus. In addition, Patent Documents 3 and 4 show the general technical level of the related art. Patent Document 3 discloses a communication system in which a transmission apparatus and a receiving apparatus transmit and receive audio-visual data by using narrow band radio communication, and which thereby turns off the power to a wide band radio communication unit when audio-visual data is not transmitted, so as to reduce the power consumption. Patent Document 4 discloses a video display system in which radio communication and infrared communication are used in parallel and which thereby eliminates the installation of external cables to some monitors.
Patent Document 1: Japanese Laid-Open Patent Publication No. 2002-247479
Patent Document 2: Japanese Laid-Open Patent Publication No. 2005-333532
Patent Document 3: Japanese Laid-Open Patent Publication No. 2005-223443
Patent Document 4: GB-A-2 389 980

### DISCLOSURE OF THE INVENTION

### PROBLEMS TO BE SOLVED BY THE INVENTION

However, to cause power on/off to the image display apparatus to operate in tandem with power on/off to the image providing apparatus, the above-described conventional image display system constantly performs control using wireless communication. Therefore, the image providing apparatus is required to be capable of wireless communication even when power thereto is off. That is, it is necessary to constantly supply power to the wireless communication section provided within the image providing apparatus even when power to the image providing apparatus is off. Consequently, conventionally, it is difficult to sufficiently reduce the electricity consumed by the image providing apparatus when power to the image providing apparatus is off.

Therefore, an object of the present invention is to provide an image display system capable of sufficiently reducing the electricity consumed by an image providing apparatus when power to the image providing apparatus is off.

### SOLUTION TO THE PROBLEMS

A first aspect is an image display system including an image providing apparatus for providing image data by wireless communication using radio waves and an image display apparatus for displaying an image corresponding to the image data provided by the image providing apparatus, the image display apparatus including: a display side wireless communication section for receiving image data provided by the image providing apparatus; a display section for displaying an image corresponding to the image data received by the display side wireless communication section; a display side control section for generating predetermined off data when a command to turn off power to the image display apparatus has been given; and a display side infrared transmission section for transmitting the off data to the image providing apparatus by wireless communication using infrared light, and the image providing apparatus including: a data acquisition section for acquiring the image data to provide to the display side wireless communication section; a providing side wireless communication section for providing the image data acquired by the data acquisition section to the display side wireless communication section; a providing side infrared reception section for receiving the off data transmitted from the display side infrared transmission section; and a providing side control section for stopping supplying power to the data acquisition section and the providing side wireless communication section when the off data has been received by the providing side infrared reception section.

In a second aspect based on the first aspect, the display side wireless communication section transmits the off data to the providing side wireless communication section by wireless communication using radio waves, and the providing side control section stops supplying power only to the data acquisition section when the off data has not been received by the providing side infrared reception section and has been received only by the providing side wireless communication section.

In a third aspect based on the second aspect, the display side infrared transmission section transmits the off data to the providing side infrared reception section at predetermined time intervals, and the providing side control section stops supplying power also to the providing side wireless communication section when the off data has been received by the providing side infrared reception section at the predetermined time intervals in a case where supply of power only to the data acquisition section is stopped.

In a fourth aspect based on the second aspect, the display side infrared transmission section transmits the off data to the providing side infrared reception section at predetermined time intervals, and the providing side control section starts supplying power to the providing side wireless communication section when the off data has not been received by the providing side infrared reception section at the predetermined time intervals in a case where supply of power to the data acquisition section and the providing side wireless communication section is stopped.

In a fifth aspect based on the second aspect, the image providing apparatus further includes a providing side infrared transmission section for, in a case where supply of power only to the data acquisition section is stopped, transmitting, by wireless communication using infrared light, data indicating an inquiry about whether or not power to the image display apparatus is off, the image display apparatus further includes a display side infrared reception section for receiving the data indicating an inquiry that is transmitted from the providing side infrared transmission section, the display side infrared transmission section transmits the off data to the providing side infrared reception section when the data indicating an inquiry has been received by the display side infrared reception section, and the providing side control section stops supplying power also to the providing side wireless communication section when the off data has been received by the providing side infrared reception section.

In a sixth aspect based on the second aspect, the image providing apparatus further includes a providing side infrared transmission section for, in a case where supply of power to the data acquisition section and the providing side wireless communication section is stopped, transmitting, by wireless communication using infrared light, data indicating an inquiry about whether or not power to the image display apparatus is off, the image display apparatus further includes a display side infrared reception section for receiving the data indicating an inquiry that is transmitted from the providing side infrared transmission section, the display side infrared transmission section transmits the off data to the providing side infrared reception section when the data indicating an inquiry has been received by the display side infrared reception section, and the providing side control section starts supplying power to the providing side wireless communication section when the off data has not been received by the providing side infrared reception section.

In a seventh aspect based on the second aspect, the display side control section generates predetermined on data when a command to turn on power to the image display apparatus has been given, the display side wireless communication section transmits the on data to the providing side wireless communication section by wireless communication using radio waves, the display side infrared transmission section transmits the on data to the providing side infrared reception section by wireless communication using infrared light, and the providing side control section starts supplying power to the data acquisition section and the providing side wireless communication section when the on data has been received by the providing side infrared reception section, or starts supplying power to the data acquisition section when the on data has not been received by the providing side infrared reception section and has been received only by the providing side wireless communication section.

In an eighth aspect based on the first aspect, the display side control section generates predetermined on data when a command to turn on power to the image display apparatus has been given, the display side infrared transmission section transmits the on data to the providing side infrared reception section by wireless communication using infrared light, and the providing side control section starts supplying power to the data acquisition section and the providing side wireless communication section when the on data has been received by the providing side infrared reception section.

In a ninth aspect, an image providing apparatus for providing image data to an image display apparatus by wireless communication using radio waves, the image providing apparatus including: a data acquisition section for acquiring image data to provide to the image display apparatus; a providing side wireless communication section for providing the image data acquired by the data acquisition section to the image display apparatus; a providing side infrared reception section for receiving predetermined off data transmitted from the image display apparatus by wireless communication using infrared light when a command to turn off power to the image display apparatus has been given; and a providing side control section stops supplying power to the data acquisition section and the providing side wireless communication section when the off data has been received by the providing side infrared reception section.

In a tenth aspect, an image display apparatus for displaying an image corresponding to image data provided by an image providing apparatus by wireless communication using radio waves, the image display apparatus including: a display side wireless communication section for receiving image data provided by the image providing apparatus; a display section for displaying an image corresponding to the image data received by the display side wireless communication section; a display side control section for, when a command to turn off power to the image display apparatus has been given, generating off data used to stop supplying power to a data acquisition section of the image providing apparatus for acquiring the image data to provide to the display side wireless communication section and to a providing side wireless communication section of the image providing apparatus for providing the image data acquired by the data acquisition section to the display side wireless communication section; and a display side infrared transmission section for transmitting the off data to the image providing apparatus by wireless communication using infrared light.

### EFFECT OF THE INVENTION

According to the first aspect, when the providing side infrared reception section is capable of receiving the off data, the supply of power to the providing side wireless communication section may be stopped, whereby it is possible to sufficiently reduce the electricity consumed by the image providing apparatus while power to the image providing apparatus is off.

According to the second aspect, when the off data has not been received by the providing side infrared reception section, the supply of power to the providing side wireless communication section may not be stopped, whereby it is possible, by the providing side wireless communication section, to transmit/receive data between the image providing apparatus and the image display apparatus when power to the image providing apparatus is off.

According to the third aspect, in the case where the supply of power to the providing side wireless communication section is not stopped, when, for example, the installation positions of the image providing apparatus and the image display apparatus change and the providing side infrared reception section becomes capable of receiving the off data transmitted from the image display apparatus, the supply of power to the providing side wireless communication section may be stopped, whereby it is possible to sufficiently reduce the electricity consumed by the image providing apparatus.

According to the fourth aspect, in the case where the supply of power to the providing side wireless communication section is stopped, when, for example, the installation positions of the image providing apparatus and the image display apparatus change and the providing side infrared reception section becomes incapable of receiving the off data transmitted from the image display apparatus, the supply of power to the providing side wireless communication section may be started, whereby it is possible, by the providing side wireless communication section, to transmit/receive data between the image providing apparatus and the image display apparatus when power to the image providing apparatus is off.

According to the fifth aspect, in the case where the supply of power to the providing side wireless communication section is not stopped, the image providing apparatus may make an inquiry to the image display apparatus about the state of power thereto, whereby, when, for example, the installation positions of the image providing apparatus and the image display apparatus change and the providing side infrared reception section becomes capable of receiving the off data transmitted from the image display apparatus, the supply of power to the providing side wireless communication section may be stopped, whereby it is possible to sufficiently reduce the electricity consumed by the image providing apparatus.

According to the sixth aspect, in the case where the supply of power to the providing side wireless communication section is stopped, the image providing apparatus may make an inquiry to the image display apparatus about the state of power thereof, whereby, when, for example, the installation positions of the image providing apparatus and the image display apparatus change and the providing side infrared reception section becomes incapable of receiving the off data transmitted from the image display apparatus, the supply of power to the providing side wireless communication section may be started, whereby it is possible, by the providing side wireless communication section, to transmit/receive data between the image providing apparatus and the image display apparatus when power to the image providing apparatus is off.

According to the seventh aspect, the on data may be transmitted from the display side wireless communication section and the display side infrared transmission section, whereby it is possible to turn on power to the image providing apparatus, regardless of whether or not the providing side infrared reception section of the image providing apparatus is capable of receiving the on data from the image display apparatus.

According to the eighth aspect, the on data may be transmitted from the display side infrared transmission section, whereby it is possible to turn on power to the image providing apparatus when the providing side infrared reception section of the image providing apparatus is capable of receiving the on data.

### BRIEF DESCRIPTION OF THE DRAWINGS

[FIG. 1] FIG. 1 is a block diagram showing an example structure of an image display system according to a first embodiment.
[FIG. 2] FIG. 2 is a diagram showing control data and an identification code that are transmitted from an image display apparatus 2.
[FIG. 3] FIG. 3 is a flow chart showing the flow of the process performed on the image display apparatus 2 when power thereto is on and off.
[FIG. 4] FIG. 4 is a flow chart showing the flow of the process performed on an image providing apparatus 1 when power thereto is on and off.
[FIG. 5] FIG. 5 is a schematic diagram showing the state of power to each element of the image providing apparatus 1.
[FIG. 6] FIG. 6 is a schematic diagram showing the cases where the reception state of an infrared reception section 14 changes when power to the image providing apparatus 1 is off.
[FIG. 7] FIG. 7 is a flow chart showing the flow of the process performed on the image display apparatus 2 when power thereto is off.
[FIG. 8] FIG. 8 is a flow chart showing the flow of the process performed on the image providing apparatus 1 when power thereto is off.
[FIG. 9] FIG. 9 is a block diagram showing an example structure of an image display system according to a third embodiment of the present invention.
[FIG. 10] FIG. 10 is a flow chart showing the flow of the process performed on an image display apparatus 2 when power thereto is off.
[FIG. 11] FIG. 11 is a flow chart showing the flow of the process performed on an image providing apparatus 1 when power thereto is off.

### DESCRIPTION OF THE REFERENCE CHARACTERS

1
image providing apparatus
2 image display apparatus
3 remote control
11 tuner section
12, 22 image/sound processing section
13, 23 wireless communication section
14, 28 infrared reception section
15, 25 power section
16, 26 control section
18, 24 infrared transmission section
21 display section
27 remote control signal reception section
131, 231 antenna

### BEST MODE FOR CARRYING OUT THE INVENTION

### (First Embodiment)

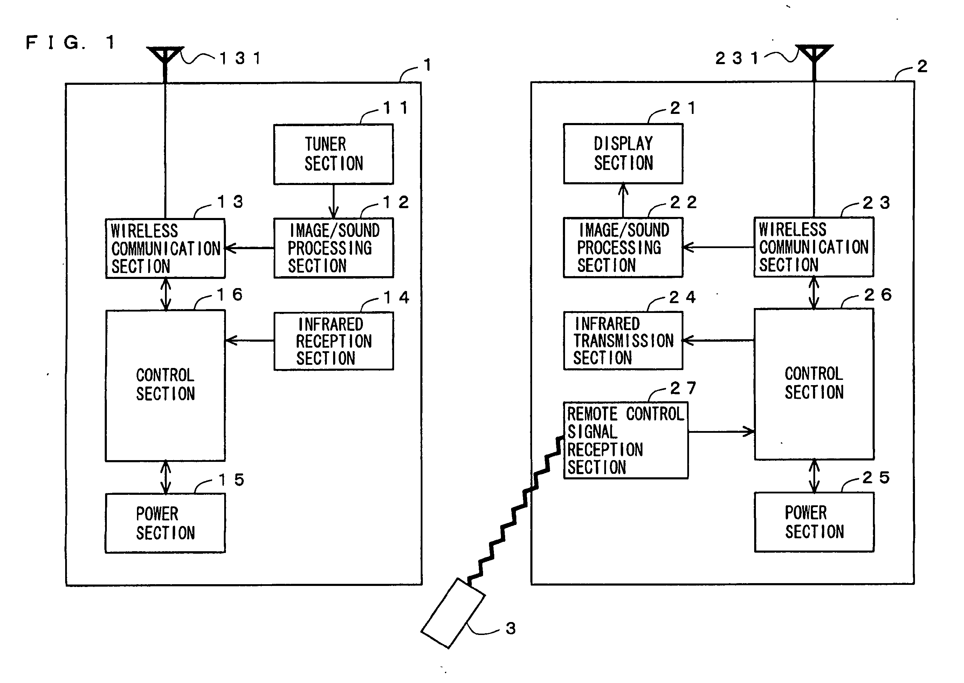

With reference to FIG. 1, an image display system according to a first embodiment of the present invention will be described. FIG. 1 is a block diagram showing an example structure of the image display system according to the first embodiment. The image display system includes an image providing apparatus 1 and an image display apparatus 2.

The image providing apparatus 1 includes a tuner section 11, an image/sound processing section 12, a wireless communication section 13, an infrared reception section 14, a power section 15, and a control section 16. The image display apparatus 2 may be, for example, a television receiver. The image display apparatus 2 includes a display section 21, an image/sound processing section 22, a wireless communication section 23, an infrared transmission section 24, a power section 25, a control section 26, and a remote control signal reception section 27.

First, each element of the image providing apparatus 1 will be described. The tuner section 11 receives image data and sound data that are transmitted from television stations and the like. The image/soundprocessing section 12 receives the image data and the sound data that are received by the tuner section 11. The image/sound processing section 12 converts the image data and the sound data, if analog data, into digital data. Then, the image/sound processing section 12 compresses the image data and the sound data and outputs the compressed image data and sound data to the wireless communication section 13. Note that the image data and the sound data are not limited to image data and sound data that are transmitted from television stations and the like, respectively. The image data and the sound data may also be image data and sound data that are outputted from an external device such as a video reproducer connected to the image providing apparatus 1. Note that a video reproducer and the like may be provided within the image providing apparatus 1. As described above, the tuner section 11 and the image/sound processing section 12 are a data acquisition section for acquiring the image data and the sound data that are to be provided to the wireless communication section 23 of the image display apparatus 2 via the wireless communication section 13 described below.

The wireless communication section 13 performs wireless communication using radio waves via an antenna 131. The radio waves used by the wireless communication section 13 may be radio waves compliant with various wireless communication standards for wireless LAN (Local Area Network) and the like. The standards for wireless LAN may be, for example, IEEE 802.11a, IEEE 802.11b, and IEEE 802.11g. Further, the electricity consumption of a device that performs wireless communication using radio waves, such as the wireless communication section 13, is generally 2 to 5 W. The wireless communication section 13 converts the image data and the sound data that are outputted from the image/sound processing section 12 into radio waves and provides the resultant radio waves to the wireless communication section 23 of the image display apparatus 2. Further, the wireless communication section 13 receives on data or off data (hereinafter collectively referred to as control data) that is transmitted from the wireless communication section 23 of the image display apparatus 2 by radio waves. The control data will be described below.

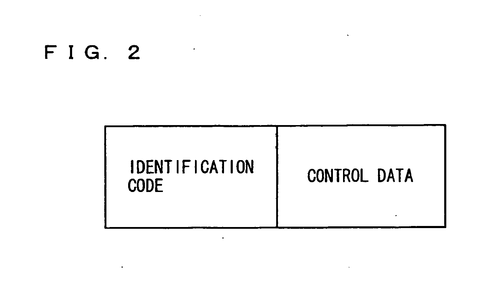

The infrared reception section 14 receives the control data and an identification code that are transmitted from the image display apparatus 2 by wireless communication using infrared light. FIG. 2 is a schematic diagram showing data transmitted from the image display apparatus 2 by infrared light. As shown in FIG. 2, the data transmitted from the image display apparatus 2 by infrared light includes the control data and the identification code. Here, the identification code is a code for identifying the image display apparatus 2 from which the control data has been transmitted and identifying other devices. That is, the identification code is a code used by the image display apparatus 2 to specify the image providing apparatus 1 as a transmission destination device. By the identification code, the image providing apparatus 1 can identify the control data as data transmitted from the image display apparatus 2. Consequently, it is possible to prevent the image providing apparatus 1 from malfunctioning by data transmitted from other devices than the image display apparatus 2. The infrared reception section 14 converts the control data received by infrared light into data of a voltage waveform and outputs the voltage waveform data to the control section 16. Note that the infrared reception section 14 may also convert the control data received by infrared light into data in digital format. Further, the infrared reception section 14 may also convert the control data received by infrared light into data of a voltage waveform and into data in digital format, and output the resultant data to the control section 16. Note that the electricity consumption of a device that receives infrared data, such as the infrared reception section 14, is generally approximately 0.1 W.

The power section 15 supplies power to the tuner section 11, the image/sound processing section 12, the wireless communication section 13, the infrared reception section 14, and the control section 16.

Based on the control data received by the wireless communication section 13 and the infrared reception section 14, the control section 16 controls the power section 15 to start or stop supplying power to each element of the image providing apparatus 1.

Next, each element of the image display apparatus 2 will be described. The wireless communication section 23 performs wireless communication using radio waves via an antenna 231. The radio waves used by the wireless communication section 23 are the same as those used by the wireless communication section 13. The wireless communication section 23 receives the image data and the sound data that are provided by the wireless communication section 13 of the image providing apparatus 1. The image data and the sound data that are received by the wireless communication section 23 are extended by the image/sound processing section 22 and outputted to the display section 21. The display section 21 may be composed of, for example, liquid crystal. The display section 21 displays an image corresponding to the image data. The sound data is outputted as a sound from a sound output section (not shown) provided within or outside the display section 21. Note that the wireless communication section 23 converts the control data generated by the control section 26 into a radio wave signal and transmits the resultant radio wave signal to the wireless communication section 13 of the image providing apparatus 1.

The remote control signal reception section 27 receives a remote control signal transmitted from a remote control 3 by wireless communication using infrared light. The remote control signal reception section 27 converts the received remote control signal into a signal of a voltage waveform and outputs the voltage waveform signal to the control section 26. Note that the remote control signal reception section 27 may also convert the received remote control signal into a signal in digital format. Further, the remote control signal reception section 27 may also convert the remote control signal into a signal of a voltage waveform and into a signal in digital format, and output the resultant signals to the control section 26.

The control section 26 generates the control data based on the remote control signal outputted from the remote control signal reception section 27. Specifically, when the remote control signal is a signal indicating a command to turn off power to the image display apparatus 2, the control section 26 generates the off data indicating that power to the image display apparatus 2 is in an off state. Further, when the remote control signal is a signal indicating a command to turn on power to the image display apparatus 2, the control section 26 generates the on data indicating that power to the image display apparatus 2 is in an on state. The control section 26 outputs the generated control data to the wireless communication section 23. Further, the control section 26 adds the identification code to the generated control data and outputs the control data having the identification code added thereto to the infrared transmission section 24. Based on the remote control signal outputted from the remote control signal reception section 27, the control section 26 controls the power section 25 to start or stop supplying power to each element of the image display apparatus 2.

The infrared transmission section 24 converts the control data and the identification code that are generated by the control section 26 into an infrared signal and transmits the resultant infrared signal to the infrared reception section 14 of the image providing,apparatus 1.

The power section 25 supplies power to the display section 21, the image/sound processing section 22, the wireless communication section 23, the infrared transmission section 24, the control section 26, and the remote control signal reception section 27.

Here, prior to describing the process of the image display system according to the present embodiment, the installation positions of the image providing apparatus 1 and the image display apparatus 2 will be described. The infrared reception section 14 and the infrared transmission section 24 transmit/receive the control data therebetween by infrared light as described above. Therefore, there may be a case where it is impossible to transmit/receive the control data between the infrared reception section 14 and the infrared transmission section 24, depending on the installation positions of the image providing apparatus 1 and the image display apparatus 2. In contrast, the wireless communication sections 13 and 23 transmit/receive the control data therebetween by wireless communication using radio waves. Therefore, it is always possible to transmit/receive the control data between the wireless communication sections 13 and 23, regardless of the installation positions of the image providing apparatus 1 and the image display apparatus 2.

Here, in the present embodiment, the description will be given on the assumption that the installation positions of the image providing apparatus 1 and the image display apparatus 2 do not change. That is, it is assumed that when it is possible to transmit/receive the control data between the infrared reception section 14 and the infrared transmission section 24, this transmittable/receivable state is maintained. Further, it is assumed that when it is impossible to transmit/receive the control data between the infrared reception section 14 and the infrared transmission section 24, this untransmittable/unreceivable state is maintained. Furthermore, it is assumed that in the image providing apparatus 1 and the image display apparatus 2, it is possible to transmit/receive the control data at least either between the infrared reception section 14 and the infrared transmission section 24 or between the wireless communication sections 13 and 23. Note that if the installation positions of the image providing apparatus 1 and the image display apparatus 2 change, there may be a case where it is impossible to transmit/receive the control data either between the infrared reception section 14 and the infrared transmission section 24 or between the wireless communication sections 13 and 23. The process performed in the cases, including this case, where the installation positions of the image providing apparatus 1 and the image display apparatus 2 change will be described below as those of second and third embodiments.

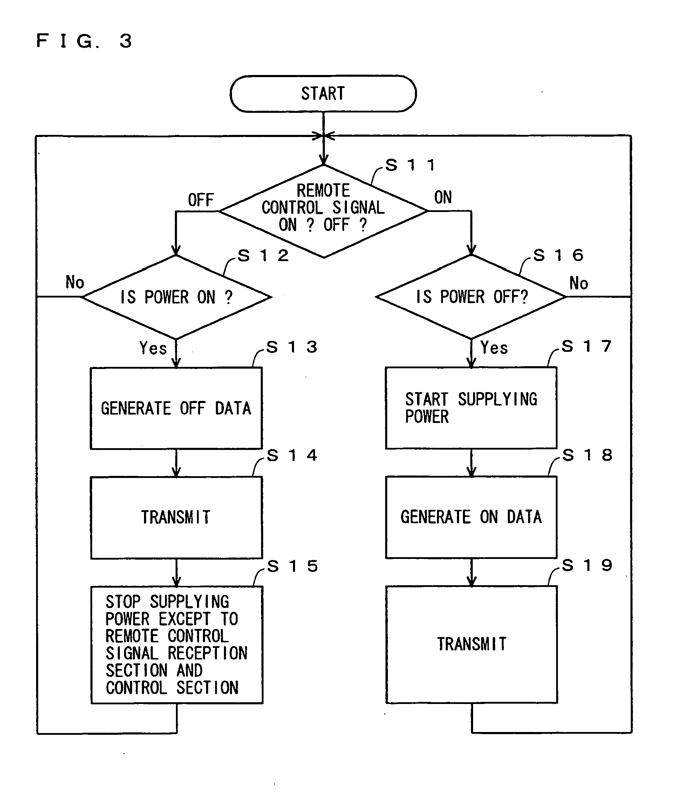

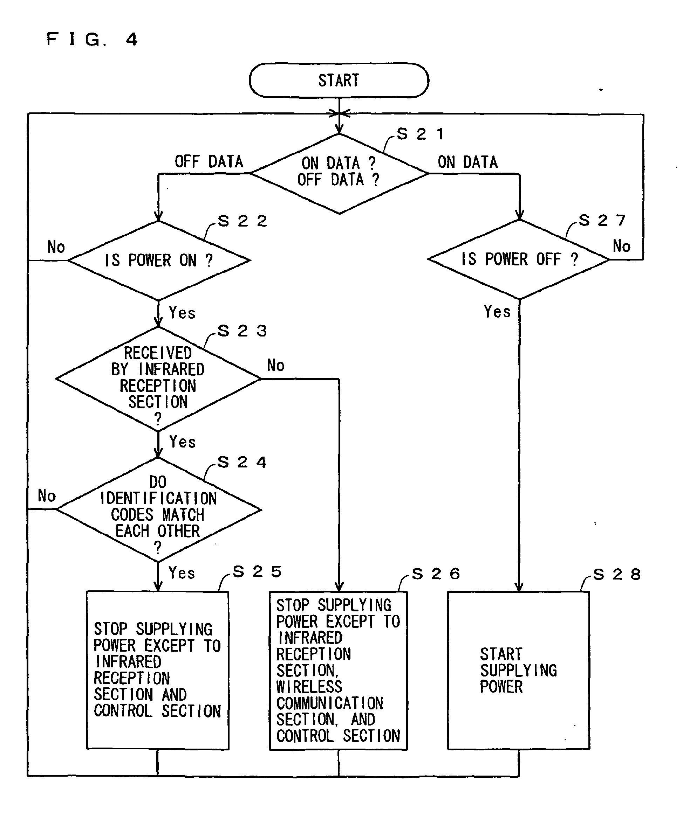

With reference to FIGS. 3 and 4, the process of the image display system according to the present embodiment, performed when power to the image display apparatus 2 and the image providing apparatus 1, respectively, is on and off will be described. FIG. 3 is a flow chart showing the flow of the process performed on the image display apparatus 2 when power thereto is on and off. FIG. 4 is a flow chart showing the flow of the process performed on the image providing apparatus 1 when power thereto is on and off.

First, with reference to FIG. 3, the process performed on the image display apparatus 2 will be described. It is assumed that a user turns on or off power to the image display apparatus 2 by operating the remote control 3. At this time, a remote control signal indicating a command to turn on or off power to the image display apparatus 2 is transmitted from the remote control 3. When the remote control signal reception section 27 has received the remote control signal, the control section 26 determines whether the remote control signal is a signal indicating a command to turn on power or a signal indicating a command to turn off power (step S11). When the remote control signal is the signal indicating a command to turn off power, the process proceeds to step S12. In step S12, the control section 26 determines whether power to the image display apparatus 2 is on or off. Note that the control section 26 determines that power to the image display apparatus 2 is on, when power is being supplied to the display section 21 and the image/sound processing section 22. The control section 26 determines that power to the image display apparatus 2 is off, when power is not being supplied to the display section 21 or the image/sound processing section 22. When the control section 26 determines that power to the image display apparatus 2 is on, the process proceeds to step S13.

In step S13, the control section 26 generates off data indicating that power to the image display apparatus 2 is in an off state. Then, the control section 26 outputs the generated off data to the wireless communication section 23. Further, the control section 26 adds a predetermined identification code to the generated off data and outputs the off data having the identification code added thereto to the infrared transmission section 24. In step S14 after step S13, the wireless communication section 23 converts the off data generated by the control section 26 into a radio wave signal and transmits the resultant radio wave signal to the wireless communication section 13 of the image providing apparatus 1. Further, the infrared transmission section 24 converts the off data and the identification code into an infrared signal and transmits the resultant infrared signal to the infrared reception section 14 of the image providing apparatus 1. Then, the control section 26 controls the power section 25 to stop supplying power to each element except for the remote control signal reception section 27 and the control section 26 (step S15).

When it is determined in step S11 that the remote control signal is the signal indicating a command to turn on power, the process proceeds to step S16. In step S16, the control section 26 determines whether power to the image display apparatus 2 is on or off. When the control section 26 determines that power to the image display apparatus 2 is off, the process proceeds to step S17. In step S17, the control section 26 controls the power section 25 to start supplying power to each element except for the remote control signal reception section 27 and the control section 26. Next, the control section 26 generates on data indicating that power to the image display apparatus 2 is in an on state (step S18). Then, the control section 26 outputs the generated on data to the wireless communication section 23. The control section 26 adds a predetermined identification code to the generated on data and outputs the on data having the identification code added thereto to the infrared transmission section 24. In step S19 after step S18, the wireless communication section 23 converts the on data generated by the control section 26 into a radio wave signal and transmits the resultant radio wave signal to the wireless communication section 13 of the image providing apparatus 1. Further, the infrared transmission section 24 converts the on data and the identification code into an infrared signal and transmits the resultant infrared signal to the infrared reception section 14 of the image providing apparatus 1.

With reference to FIG. 4, the process performed on the image providing apparatus 1 will be described. When the wireless communication section 13 and/or the infrared reception section 14 have received the control data transmitted from the image display apparatus 2, the control section 16 determines whether the control data is the on data or the off data (step S21). When the control data is the off data, the process proceeds to step S22. In step S22, the control section 16 determines whether power to the image providing apparatus 1 is on or off. Here, the control section 16 determines that power to the image display apparatus 1 is on, when power is being supplied to the tuner section 11 and the image/sound processing section 12. The control section 16 determines that power to the image display apparatus 1 is off, when power is not being supplied to the tuner section 11 or the image/sound processing section 12. When the control section 16 determines that power to the image providing apparatus 1 is on, the process proceeds to step S23.

In step S23, the control section 16 determines whether or not the control data transmitted from the image display apparatus 2 has been received by the infrared reception section 14. When the control data has been received by the infrared reception section 14, the process proceeds to step S24. When the control data has not been received by the infrared reception section 14, the process proceeds to step S26.

In step S24, the control section 16 determines whether or not the identification code received with the control data matches an identification code unique to the image providing apparatus 1. When the identification codes match each other, the control section 16 controls the power section 15 to stop supplying power to each element except for the infrared reception section 14 and the control section 16 (step S25). That is, in step S25, the supply of power to the tuner section 11, the image/sound processing section 12, and the wireless communication section 13 is stopped. As described above, the supply of power to the wireless communication section 13 is stopped when the infrared reception section 14 is capable of receiving the control data.

When it is determined in step S23 that the control data has been received only by the wireless communication section 13, the process proceeds to step S26. In step S26, the control section 16 controls the power section 15 to stop supplying power to each element except for the wireless communication section 13, the infrared reception section 14, and the control section 16 (step S26). That is, in step S26, the supply of power to the tuner section 11 and the image/sound processing section 12 is stopped. As described above, the supply of power to the wireless communication section 13 is not stopped when the infrared reception section 14 is incapable of receiving the control data.

When it is determined in step S21 that the control data is the on data, the process proceeds to step S27. In step S27, the control section 16 determines whether power to the image providing apparatus 1 is on or off. When the control section 16 determines that power to the image providing apparatus 1 is off, the process proceeds to step S28. In step S28, the control section 16 controls the power section 15 to start supplying power to the elements to which the supply of power has been stopped. That is, the control section 16 performs control to supply power to all of the elements of the image providing apparatus 1. Note that the case where power to the image providing apparatus 1 is off includes: the case where the supply of power to the wireless communication section 13 is stopped (step S25) ; and the case where power is being supplied to the wireless communication section 13 (step S26). However, the on data generated by the image display apparatus 2 is transmitted from both the wireless communication section 23 and the infrared transmission section 24, as is the off data. Therefore, whether power to the image providing apparatus 1 is off in the off state of step S25 or off in the off state of step S26, either the wireless communication section 13 or the infrared reception section 14 is capable of receiving the on data transmitted from the image display apparatus 2.

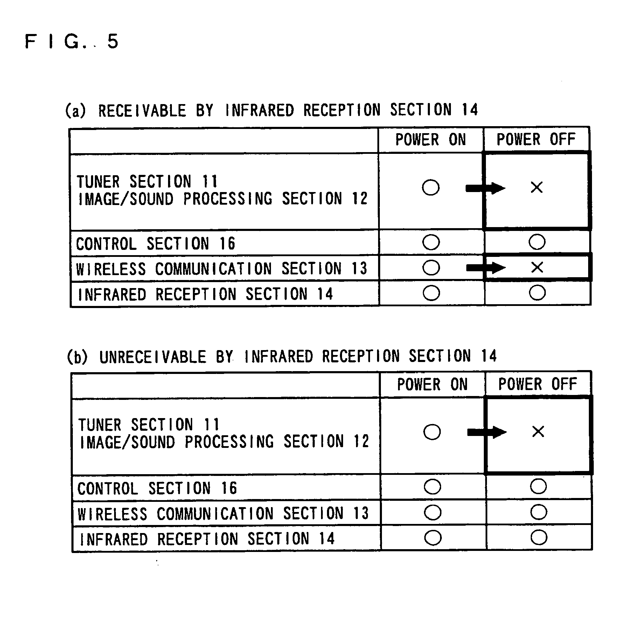

Here, with reference to FIG. 5, the method of, as a result of the process performed on the image providing apparatus 1, controlling the supply of power to each element of the image providing apparatus 1 will be described again. FIG. 5 is a schematic diagram showing the state of power to each element of the image providing apparatus 1.

(a) of FIG. 5 shows the case where the image providing apparatus 1 and the image display apparatus 2 are positioned such that the infrared reception section 14 is capable of receiving the control data. In this case, as indicated by the heavy-lined boxes of (a) of FIG. 5, the control section 16 stops supplying power to the tuner section 11, the image/sound processing section 12, and the wireless communication section 13. The reason is that since the infrared reception section 14 is capable of receiving the control data, it is possible, by the infrared reception section 14, to operate in tandem with power to the image display apparatus 2.

In contrast, (b) of FIG. 5 shows the case where the image providing apparatus 1 and the image display apparatus 2 are positioned such that the infrared reception section 14 is incapable of receiving the control data. In this case, as indicated by the heavy-lined box of (b) of FIG. 5, the control section 16 stops supplying power to the tuner section 11 and the image/sound processing section 12, but does not stop supplying power to the wireless communication section 13. The reason is that since the infrared reception section 14 is incapable of receiving the control data, it is necessary, by the wireless communication section 13, to operate in tandem with power to the image display apparatus 2.

As described above, in the present embodiment, the supply of power to the wireless communication section 13 of the image providing apparatus 1 is stopped when the infrared reception section 14 of the image providing apparatus 1 is capable of receiving the control data. Here, the electricity consumption of the infrared reception section 14 is, as described above, approximately 0.1 W. On the other hand, the electricity consumption of the wireless communication section 13 is 2 to 5 W. Therefore, based on the present embodiment, it is possible to stop supplying power to the wireless communication section 13 when power to the image providing apparatus 1 is off, and thus it is possible to sufficiently reduce the electricity consumption of the image providing apparatus 1. That is, based on the present embodiment, it is possible to make the electricity consumption of the image providing apparatus 1 smaller than that conventionally required when it is necessary to constantly supply power to the wireless communication section 13.

### (Second Embodiment)

Next, an image display system according to a second embodiment of the present invention will be described. Since the image display system according to the present embodiment is similar in structure to the image display system according to the first embodiment shown in FIG. 1, each element according to the present embodiment will not be described in detail.

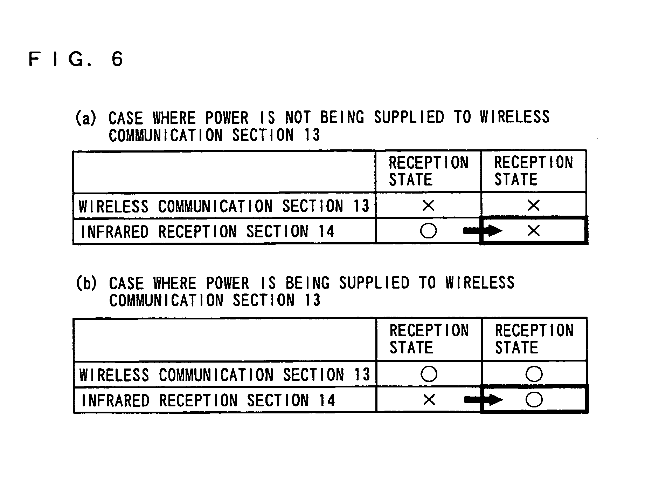

Next, prior to describing the process of the image display system according to the present embodiment in detail, the purpose of the process and its overview will be described. In the above-described first embodiment, the description is given on the assumption that the installation positions of the image providing apparatus 1 and the image display apparatus 2 do not change. However, as shown in FIG. 6, there may be a case where the installation positions of the image providing apparatus 1 and the image display apparatus 2 change after power to the image providing apparatus 1 is turned off, and the reception state of the infrared reception section 14 changes accordingly. FIG. 6 is a schematic diagram showing the cases where the reception state of the infrared reception section 14 changes while power to the image providing apparatus 1 is off.

(a) of FIG. 6 shows the change of the reception state of the infrared reception section 14 in the case where the supply of power to the wireless communication section 13 is stopped and power to the image providing apparatus 1 is off. In (a) of FIG. 6, that the supply of power to the wireless communication section 13 is stopped indicates that the infrared reception section 14 was capable of receiving the control data when power to the image providing apparatus 1 was turned off. As indicated by the heavy-lined box of (a) of FIG. 6, there may be a case where the installation position of either the image providing apparatus 1 or the image display apparatus 2 changes thereafter and the infrared reception section 14 becomes incapable of receiving the control data. Alternatively, there may be a case where, even when the installation position does not change, neither the infrared reception section 14 nor the wireless communication section 13 are capable of receiving the control data, as the initial state of the image providing apparatus 1. If these states are maintained, even when the on data is transmitted from the image display apparatus 2, neither the wireless communication section 13 nor the infrared reception section 14 are capable of receiving the transmitted on data. As a result, it is impossible to turn on power to the image providing apparatus 1. Therefore, in these states, it is necessary to perform a process so as to start supplying power to the wireless communication section 13.

(b) of FIG. 6 shows the change of the reception state of the infrared reception section 14 in the case where power to the image providing apparatus 1 is off in the state where power is being supplied to the wireless communication section 13. In (b) of FIG. 6, that power is being supplied to the wireless communication section 13 indicates that the infrared reception section 14 was incapable of receiving the control data when power to the image providing apparatus 1 was turned off. As indicated by the heavy-lined box of (b) of FIG. 6, there may be a case where the installation position of either the image providing apparatus 1 or the image display apparatus 2 changes thereafter and the infrared reception section 14 becomes capable of receiving the control data. If this state is maintained, even though the infrared reception section 14 is capable of receiving the control data, power remains supplied to the wireless communication section 13. Therefore, in this state, it is only necessary to stop supplying power to the wireless communication section 13. As a result, it is possible to sufficiently reduce the electricity consumption of the image providing apparatus 1. An image display system for performing this process will be described below as the image display system according to the second embodiment.

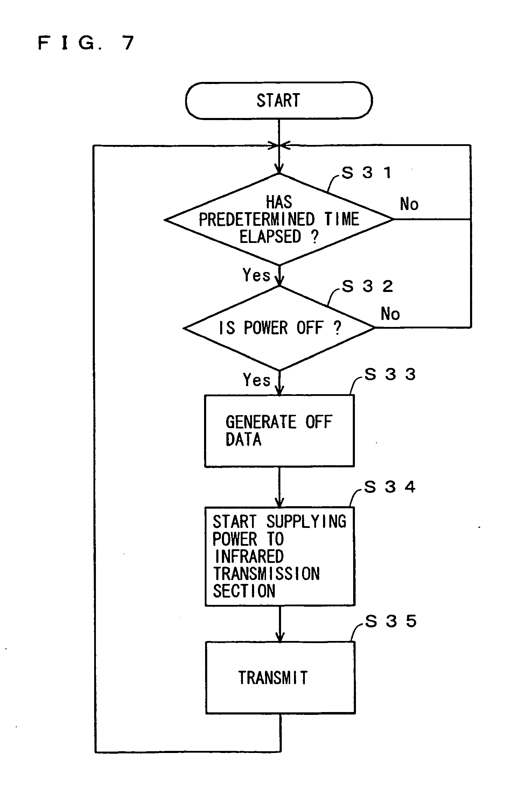

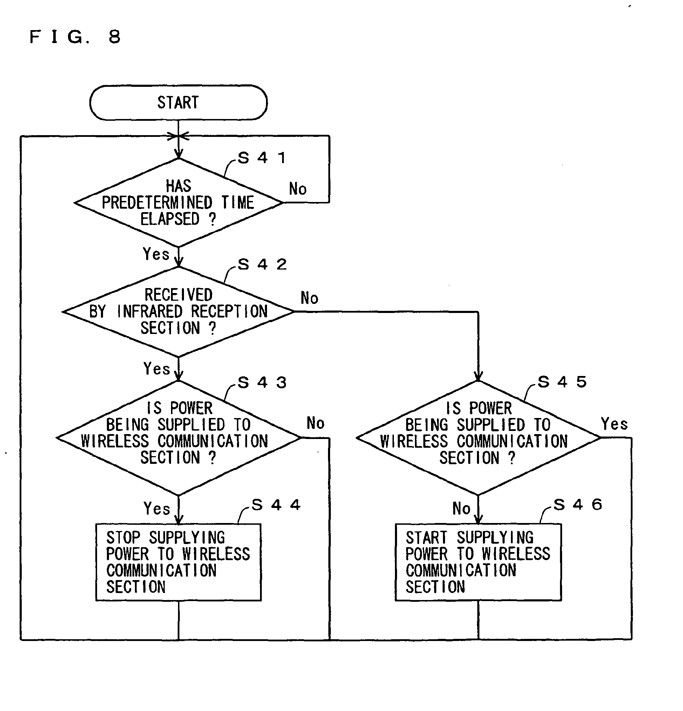

Next, with reference to FIGS. 7 and 8, the process of the image display system according to the present embodiment will be described. FIG. 7 is a flow chart showing the flow of the process performed on the image display apparatus 2 when power thereto is off. FIG. 8 is a flow chart showing the flow of the process performed on the image providing apparatus 1 when power thereto is off.

First, with reference to FIG. 7, the process performed on the image display apparatus 2 will be described. When a predetermined time has elapsed ("Yes" in step S31), the control section 26 determines whether power to the image display apparatus 2 is on or off (step S32). When determining that power to the image display apparatus 2 is off, the control section 26 generates off data indicating that power to the image display apparatus 2 is in an off state (step S33). Here, as described in the first embodiment, when power to the image display apparatus 2 is off, power is not being supplied to the infrared transmission section 24. Therefore, the control section 26 controls the power section 25 to start supplying power to the infrared transmission section 24 (step S34). After step S34, the control section 26 adds a predetermined identification code to the generated off data and outputs the off data having the identification code added thereto to the infrared transmission section 24. The infrared transmission section 24 converts the off data and the identification code that are generated by the control section 26 into an infrared signal and transmits the resultant infrared signal to the infrared reception section 14 of the image providing apparatus 1 (step S35). Then, the control section 26 controls the power section 25 to stop supplying power to the infrared transmission section 24.

With reference to FIG. 8, the process performed on the image providing apparatus 1 will be described. This process is a process performed when power to the image providing apparatus 1 is off. When the same predetermined time as that of the image display apparatus 2 has elapsed ("Yes" in step S41), the control section 16 determines whether or not the control data transmitted from the image display apparatus 2 has been received by the infrared reception section 14 (step S42). That is, the control section 16 confirms, at the same timing as that at which the off data is transmitted from the image display apparatus 2, the reception thereof. When the control data transmitted from the image display apparatus 2 has been received by the infrared reception section 14 ("Yes" in step S42), the infrared reception section 14 is capable of receiving the control data, and thus the process proceeds to step S43. In step S43, the control section 16 determines whether or not power is being supplied to the wireless communication section 13. When power is being supplied to the wireless communication section 13, the control section 16 controls the power section 15 to stop supplying power to the wireless communication section 13 (step S44). Consequently, it is possible to sufficiently reduce the electricity consumption of the image providing apparatus 1.

When the control data transmitted from the image display apparatus 2 has not been received by the infrared reception section 14 ("No" in step S42), the infrared reception section 14 is incapable of receiving the control data, and thus the process proceeds to step S45. In step S45, the control section 16 determines whether or not power is being supplied to the wireless communication section 13. When power is not being supplied to the wireless communication section 13, the control section 16 starts supplying power to the wireless communication section 13 in step S46. Consequently, even when neither the infrared reception section 14 nor the wireless communication section 13 are capable of receiving the control data, it is possible to turn on power to image providing apparatus 1 in accordance with power on to the image display apparatus 2.

As described above, based on the present embodiment, when the off data is transmitted from the image display apparatus 2 at predetermined time intervals and neither the infrared reception section 14 nor the wireless communication section 13 are capable of receiving the control data in the image providing apparatus 1, the supply of power to the wireless communication section 13 may be started, whereby it is possible to cause power to the image providing apparatus 1 to operate in tandem with power on to the image display apparatus 2.

Further, based on the present embodiment, when the infrared reception section 14 of the image providing apparatus 1 becomes capable of receiving the control data transmitted from the image display apparatus 2, the supply of power to the wireless communication section 13 may be stopped, whereby it is possible to sufficiently reduce the electricity consumption of the image providing apparatus 1.

### (Third Embodiment)

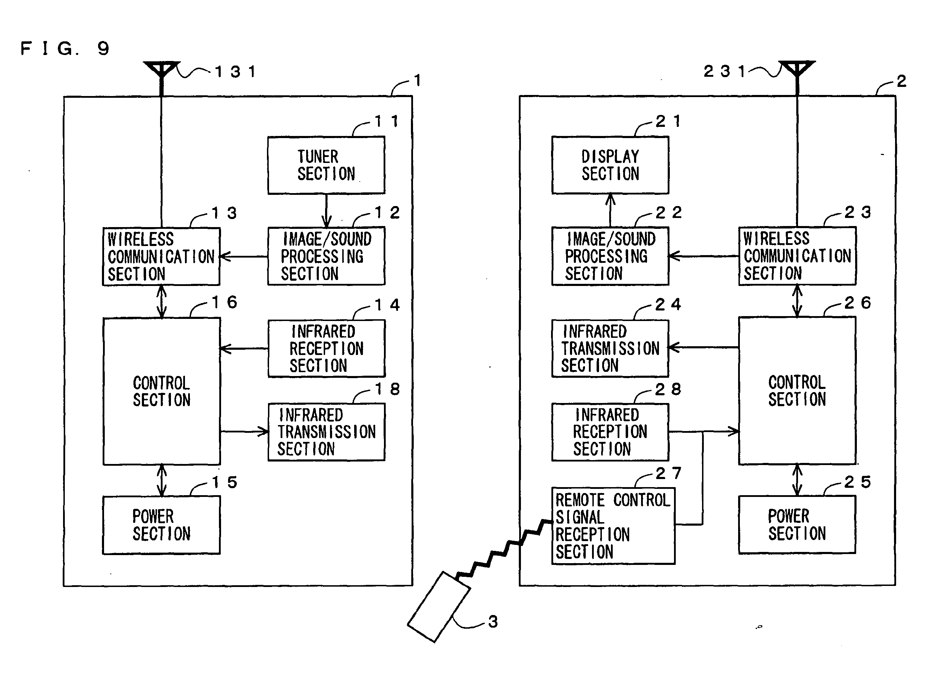

With reference to FIG. 9, an image display system according to a third embodiment of the present invention will be described. FIG. 9 is a block diagram showing an example structure of the image display system according to the third embodiment of the present invention. The image display system according to the present embodiment includes an image providing apparatus 1 and an image display apparatus 2. The image providing apparatus 1 includes a tuner section 11, an image/sound processing section 12, a wireless communication section 13, an infrared reception section 14, a power section 15, a control section 16, and an infrared transmission section 18. The image display apparatus 2 includes a display section 21, an image/sound processing section 22, a wireless communication section 23, an infrared transmission section 24, a power section 25, a control section 26, a remote control signal reception section 27, and an infrared reception section 28. The image display system according to the present embodiment is different from those according to the first and second embodiments in that the image display system according to the present embodiment additionally includes the infrared transmission section 18 and the infrared reception section 28. The infrared transmission section 18 has the same functions as those of the infrared transmission section 24. The infrared reception section 28 has the same functions as those of the infrared reception section 14. Further, each element except for the infrared transmission section 18 and the infrared reception section 28 is similar to those of the first and second embodiments, and therefore will be denoted by the same numeral and will not be described.

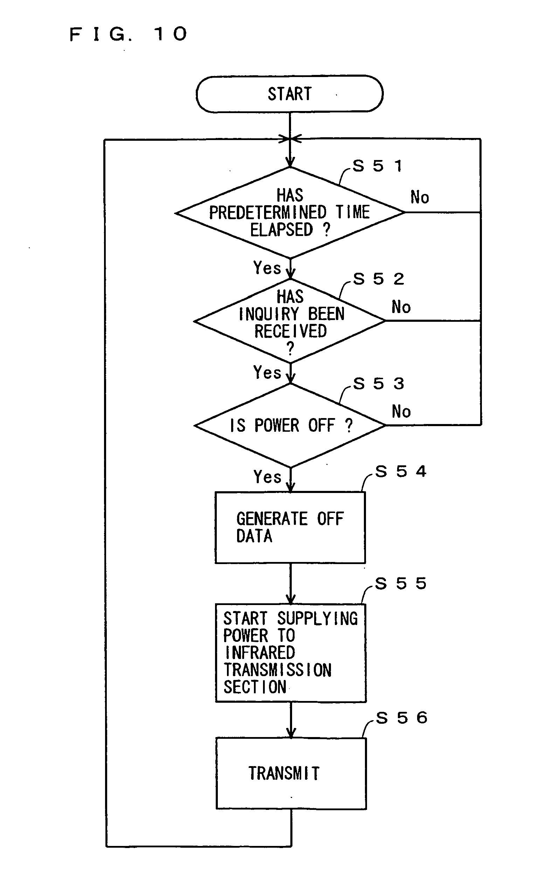

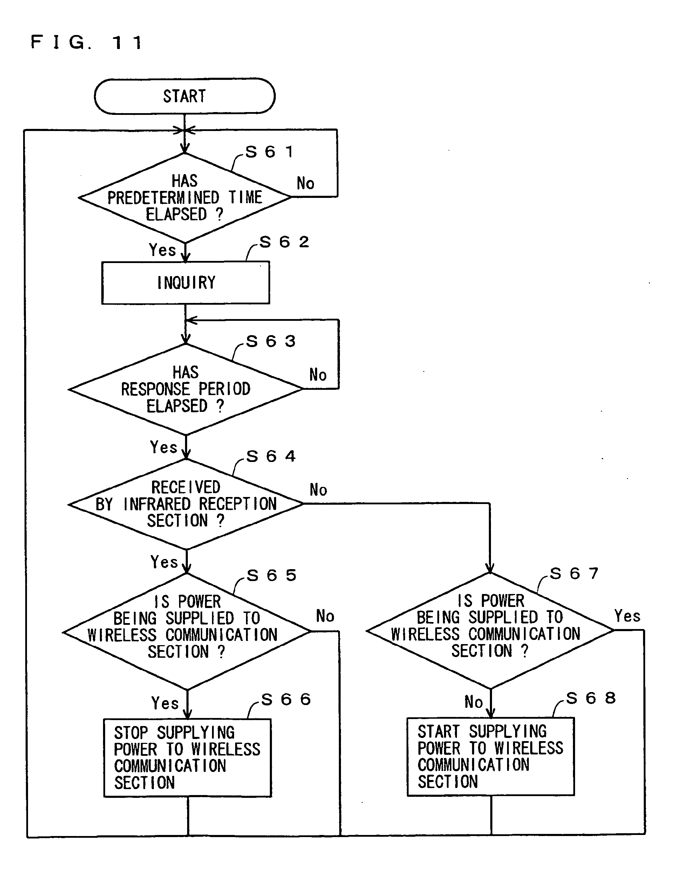

Similarly to the second embodiment, the image display system according to the present embodiment is an image display system for, even when the installation positions of the image providing apparatus 1 and the image display apparatus 2 change and the reception state of the infrared reception section 14 of the image providing apparatus 1 changes accordingly, performing an optimal process in response to the change of the reception state. The difference between the present embodiment and the second embodiment is that in the present embodiment, the image providing apparatus 1 makes an inquiry to the image display apparatus 2. With reference to FIGS. 10 and 11, the description will be given below with a focus on the difference. FIG. 10 is a flow chart showing the flow of the process performed on the image display apparatus 2 when power thereto is off. FIG. 11 is a flow chart showing the flow of the process performed on the image providing apparatus 1 when power thereto is off.

First, with reference to FIG. 10, the process performed on the image display apparatus 2 will be described. When a predetermined time has elapsed ("Yes" in step S51), the control section 26 determines whether or not data indicating an inquiry from the image providing apparatus 1 has been received by the infrared reception section 28 (step S52). That is, the control section 26 confirms, at the same timing as that at which the data indicating an inquiry is transmitted from the image providing apparatus 1, the reception thereof. Here, although power to the image display apparatus 2 is off, the supply of power to the infrared reception section 28 may be stopped or power may be being supplied thereto. When the supply of power to the infrared reception section 28 is stopped, it is only necessary to supply power to the infrared reception section 28 only while the process of step S52 is performed. When the data indicating an inquiry has been received, the control section 26 determines whether or not power to the image display apparatus 2 is off (step S53). When determining that power to the image display apparatus 2 is off, the control section 26 generates off data indicating that power to the image display apparatus 2 is in an off state (step S54). Here, as described in the first embodiment, when power to the image display apparatus 2 is off, power is not being supplied to the infrared transmission section 24. Therefore, the control section 26 starts supplying power to the infrared transmission section 24 (step S55). After step S55, the control section 26 adds a predetermined identification code to the generated off data and outputs the off data having the identification code added thereto to the infrared transmission section 24. The infrared transmission section 24 converts the off data and the identification code that are generated by the control section 26 into an infrared signal and transmits the resultant infrared signal to the infrared reception section 14 of the image providing apparatus 1 (step S56). Then, the control section 26 controls the power section 25 to stop supplying power to the infrared transmission section 24.

Next, with reference to FIG. 11, the process performed on the image providing apparatus 1 will be described. This process is a process performed when power to the image providing apparatus 1 is off. When a predetermined time has elapsed ("Yes" in step S61), the control section 16 transmits, by infrared light via the infrared transmission section 18, the data indicating an inquiry about whether or not power to the image display apparatus 2 is off (step S62). Here, although power to the image providing apparatus 1 is off, the supply of power to the infrared transmission section 18 may be stopped or power may be being supplied thereto. When the supply of power to the infrared transmission section 18 is stopped, it is only necessary to supply power to the infrared transmission section 18 only while the process of step S62 is performed. Next, the control section 16 waits for the expiration of a predetermined response period to the inquiry transmitted by the control section 16 (step S63). After step S63, the control section 16 determines whether or not the off data transmitted from the image display apparatus 2 has been received by the infrared reception section 14 (step S64). When the off data transmitted from the image display apparatus 2 has been received by the infrared reception section 14 ("Yes" in step S64), the infrared reception section 14 is capable of receiving the off data, and thus the process proceeds to step S65. In step S65, the control section 16 determines whether or not power is being supplied to the wireless communication section 13. When power is being supplied to the wireless communication section 13, the control section 16 controls the power section 15 to stop supplying power to the wireless communication section 13 (step S66). Consequently, it is possible to sufficiently reduce the electricity consumption of the image providing apparatus 1.

When the off data transmitted from the image display apparatus 2 has not been received by the infrared reception section 14 ("No" in step S64), the infrared reception section 14 is incapable of receiving the off data, and thus the process proceeds to step S67. In step S67, the control section 16 determines whether or not power is being supplied to the wireless communication section 13. When power is not being supplied to the wireless communication section 13, the control section 16 starts supplying power to the wireless communication section 13 in step S68. Consequently, even when neither the infrared reception section 14 nor the wireless communication section 13 are capable of receiving the control data, it is possible to turn on power to the image providing apparatus 1 in accordance with power on to the image display apparatus 2.

As described above, based on the present embodiment, the image providing apparatus 1 may make an inquiry to the image display apparatus 2, and then the supply of power to the wireless communication section 13 may be started when neither the infrared reception section 14 nor the wireless communication section 13 are capable of receiving the control data in the image providing apparatus 1, whereby it is possible to cause power to the image providing apparatus 1 to operate in tandem with power on to the image display apparatus 2.

Further, based on the present embodiment, when the infrared reception section 14 of the image providing apparatus 1 has become capable of receiving the control data transmitted from the image display apparatus 2, the supply of power to the wireless communication section 13 may be stopped, whereby it is possible to sufficiently reduce the electricity consumption of the image providing apparatus 1.

Note that in the above description, the infrared reception section 28 and the remote control signal reception section 27 are provided separately, but may be combined together. That is, the remote control signal reception section 27 may also perform the functions of the infrared reception section 28.

### INDUSTRIAL APPLICABILITY

The present invention is useful for an image display system capable of sufficiently reducing the electricity consumed by an image providing apparatus when power to the image providing apparatus is off.

## Claims

1. An image display system comprising an image providing apparatus (1) for providing image data by wireless communication using radio waves and an image display apparatus (2) for displaying an image corresponding to the image data provided by the image providing apparatus (1),
the image display apparatus (2) including:
a display side wireless communication section (23) for receiving image data provided by the image providing apparatus (1);
a display section (21) for displaying an image corresponding to the image data received by the display side wireless communication section (23);
a display side control section (26) for generating predetermined off data when a command to turn off power to the image display apparatus (2) has been given; and
a display side infrared transmission section (24) for transmitting the off data to the image providing apparatus (1) by wireless communication using infrared light,
the image providing apparatus (1) including:
a data acquisition section (11, 12) for acquiring the image data to provide to the display side wireless communication section (23);
a providing side wireless communication section (13) for providing the image data acquired by the data acquisition section (11, 12) to the display side wireless communication section (23);
a providing side infrared reception section (14) for receiving the off data transmitted from the display side infrared transmission section (24); and
a providing side control section (16),
**characterized in that** the system is so adapted that,
when a command to turn off power to the image display apparatus (2) has been given, the display side infrared transmission section (24) transmits the off data to the providing side infrared reception section (14) by wireless communication using infrared light
and
the display side wireless communication section (23) transmits the off data to the providing side wireless communication section (13) by wireless communication using radio waves and
the providing side control section (16) stops supplying power to the data acquisition section (11, 12) and the providing side wireless communication section (13) when the off data has been received by the providing side infrared reception section (14)
and
the providing side control section (16) stops supplying power only to the data acquisition section (11, 12) when the off data has not been received by the providing side infrared reception section (14) and has been received only by the providing side wireless communication section (13).

2. The image display system according to claim 1,
wherein the display side infrared transmission section (24) transmits the off data to the providing side infrared reception section (14) at predetermined time intervals, and wherein the providing side control section (16) stops supplying power also to the providing side wireless communication section (13) when the off data has been received by the providing side infrared reception section (14) at the predetermined time intervals in a case where supply of power only to the data acquisition section (11, 12) is stopped.

3. The image display system according to claim 1,
wherein the display side infrared transmission section (24) transmits the off data to the providing side infrared reception section (14) at predetermined time intervals, and wherein the providing side control section (16) starts supplying power to the providing side wireless communication section (13) when the off data has not been received by the providing side infrared reception section (14) at the predetermined time intervals in a case where supply of power to the data acquisition section (11, 12) and the providing side wireless communication section (13) is stopped.

4. The image display system according to claim 1,
wherein the image providing apparatus (1) further includes a providing side infrared transmission section (18) for, in a case where supply of power only to the data acquisition section (11, 12) is stopped, transmitting, by wireless communication using infrared light, data indicating an inquiry about whether or not power to the image display apparatus (2) is off,
wherein the image display apparatus (2) further includes a display side infrared reception section (28) for receiving the data indicating an inquiry that is transmitted from the providing side infrared transmission section (18),
wherein the display side infrared transmission section (24) transmits the off data to the providing side infrared reception section (14) when the data indicating an inquiry has been received by the display side infrared reception section (28), and
wherein the providing side control section (16) stops supplying power also to the providing side wireless communication section (13) when the off data has been received by the providing side infrared reception section (14).

5. The image display system according to claim 1,
wherein the image providing apparatus (1) further includes a providing side infrared transmission section (18) for, in a case where supply of power to the data acquisition section (11, 12) and the providing side wireless communication section (13) is stopped, transmitting, by wireless communication using infrared light, data indicating an inquiry about whether or not power to the image display apparatus (2) is off,
wherein the image display apparatus (2) further includes a display side infrared reception section (28) for receiving the data indicating an inquiry that is transmitted from the providing side infrared transmission section (18),
wherein the display side infrared transmission section (24) transmits the off data to the providing side infrared reception section (14) when the data indicating an inquiry has been received by the display side infrared reception section (28), and
wherein the providing side control section (16) starts supplying power to the providing side wireless communication section (13) when the off data has not been received by the providing side infrared reception section (14).

6. The image display system according to claim 1,
wherein the display side control section (26) generates predetermined on data when a command to turn on power to the image display apparatus (2) has been given,
wherein the display side wireless communication section (23) transmits the on data to the providing side wireless communication section (13) by wireless communication using radio waves,
wherein the display side infrared transmission section (24) transmits the on data to the providing side infrared reception section (14) by wireless communication using infrared light, and
wherein the providing side control section (16) starts supplying power to the data acquisition section (11, 12) and the providing side wireless communication section (13) when the on data has been received by the providing side infrared reception section (14), or starts supplying power to the data acquisition section (11, 12) when the on data has not been received by the providing side infrared reception section (14) and has been received only by the providing side wireless communication section (13).

7. The image display system according to claim 1,
wherein the display side control section (26) generates predetermined on data when a command to turn on power to the image display apparatus (2) has been given,
wherein the display side infrared transmission section (24) transmits the on data to the providing side infrared reception section (14) by wireless communication using infrared light, and
wherein the providing side control section (16) starts supplying power to the data acquisition section (11, 12) and the providing side wireless communication section (13) when the on data has been received by the providing side infrared reception section (14).

8. An image providing apparatus (1) for providing image data to an image display apparatus (2) by wireless communication using radio waves, the image providing apparatus (1) comprising:
a data acquisition section (11, 12) for acquiring image data to provide to the image display apparatus (2);
a providing side wireless communication section (13) for providing the image data acquired by the data acquisition section (11, 12) to the image display apparatus (2);
a providing side infrared reception section (14) for receiving predetermined off data transmitted from the image display apparatus (2) by wireless communication using infrared light when a command to turn off power to the image display apparatus (2) has been given;
**characterized in that** the apparatus is so adapted that,
when a command to turn off power to the image display apparatus (2) has been given, the image display apparatus (2) transmits the off data to the providing side wireless communication section (13) by wireless communication using radio waves
and
the image display apparatus (2) transmits the off data to the providing side infrared reception section (14) by wireless communication using infrared light
and
the providing side control section (16) stops supplying power to the data acquisition section (11, 12) and the providing side wireless communication section (13) when the off data has been received by the providing side infrared reception section (14),
and
the providing side control section (16) stops supplying power only to the data acquisition section (11, 12) when the off data has not been received by the providing side infrared reception section (14) and has been received only by the providing side wireless communication section (13).

9. An image display apparatus (2) for displaying an image corresponding to image data provided by an image providing apparatus (1) by wireless communication using radio waves, the image display apparatus (2) comprising:
a display side wireless communication section (23) for receiving image data provided by the image providing apparatus (1);
a display section (21) for displaying an image corresponding to the image data received by the display side wireless communication section (23);
a display side control section (26) for, when a command to turn off power to the image display apparatus (2) has been given, generating off data used to stop supplying power to a data acquisition section (11, 12) of the image providing apparatus (1) for acquiring the image data to provide to the display side wireless communication section (23) and to a providing side wireless communication section (13) of the image providing apparatus (1) for providing the image data acquired by the data acquisition section (11, 12) to the display side wireless communication section (23); and
a display side infrared transmission section (24) for transmitting the off data to the image providing apparatus (1) by wireless communication using infrared light,
**characterized in that** the apparatus is so adapted that,
when a command to turn off power to the image display apparatus (2) has been given,
the display side wireless communication section (23) transmits the off data to the providing side wireless communication section (13) by wireless communication using radio waves
and
the display side infrared transmission section (24) transmits the off data to the image providing apparatus (1) by wireless communication using infrared light
and
the image providing apparatus (1) stops supplying power to the data acquisition section (11, 12) and its wireless communication section when the off data has been received from the display side infrared transmission section (24)
and
the image providing apparatus (1) stops supplying power only to the data acquisition section (11, 12) when the off data has not been received from the display side infrared transmission section (24) and has been received only from the display side wireless communication section (23).

## Patentansprüche

1. Bildanzeigesystem umfassend eine Bildbereitstellungsvorrichtung (1) zum Bereitstellen von Bilddaten mittels drahtloser Kommunikation unter Verwendung von Funkwellen und eine Bildanzeigevorrichtung (2) zum Anzeigen eines den durch die Bildbereitstellungsvorrichtung (1) bereitgestellten Bilddaten entsprechenden Bilds,
wobei die Bildanzeigevorrichtung (2) enthält:
einen anzeigeseitigen drahtlosen Kommunikationsabschnitt (23) zum Empfangen von durch die Bildbereitstellungsvorrichtung (1) bereitgestellten Bilddaten;
einen Anzeigeabschnitt (21) zum Anzeigen eines den durch den anzeigeseitigen drahtlosen Kommunikationsabschnitt (23) empfangenen Bilddaten entsprechenden Bilds;
einen anzeigeseitigen Steuerabschnitt (26) zum Erzeugen von vorbestimmten Aus-Daten, wenn ein Befehl zum Ausschalten des Stroms an die Bildanzeigevorrichtung (2) gegeben wurde;
einen anzeigeseitigen Infrarotübertragungsabschnitt (24) zum Übertragen der Aus-Daten an die Bildbereitstellungsvorrichtung (1) mittels drahtloser Kommunikation unter Verwendung von infrarotem Licht,
wobei die Bildbereitstellungsvorrichtung (1) enthält:
einen Datenerfassungsabschnitt (11, 12) zum Erfassen der an den anzeigeseitigen drahtlosen Kommunikationsabschnitt (23) bereitzustellenden Bilddaten;
einen bereitstellungsseitigen drahtlosen Kommunikationsabschnitt (13) zum Bereitstellen der durch den Datenerfassungsabschnitt (11, 12) erfassten Bilddaten an den anzeigeseitigen drahtlosen Kommunikationsabschnitt (23);
einen bereitstellungsseitigen Infrarotempfangsabschnitt (14) zum Empfangen der vom anzeigeseitigen Infrarotübertragungsabschnitt (24) übertragenen Aus-Daten; und
einen bereitstellungsseitigen Steuerabschnitt (16),
**dadurch gekennzeichnet, dass** das System so angepasst ist, dass,
wenn ein Befehl zum Ausschalten des Stroms an die Bildanzeigevorrichtung (2) gegeben wurde, der anzeigeseitige Infrarotübertragungsabschnitt (24) die Aus-Daten an den bereitstellungsseitigen Infrarotempfangsabschnitt (14) mittels drahtloser Kommunikation unter Verwendung von infrarotem Licht überträgt
und
der anzeigeseitige drahtlose Kommunikationsabschnitt (23) die Aus-Daten an den bereitstellungsseitigen drahtlosen Kommunikationsabschnitt (13) mittels drahtloser Kommunikation unter Verwendung von Funkwellen überträgt
und
der bereitstellungsseitige Steuerabschnitt (16) eine Stromversorgung zum Datenerfassungsabschnitt (11, 12) und zum bereitstellungsseitigen drahtlosen Kommunikationsabschnitt (13) unterbricht, wenn die Aus-Daten durch den bereitstellungsseitigen Infrarotempfangsabschnitt (14) empfangen wurden
und
der bereitstellungsseitige Steuerabschnitt (16) die Stromversorgung nur zum Datenerfassungsabschnitt (11, 12) unterbricht, wenn die Aus-Daten nicht durch den bereitstellungsseitigen Infrarotempfangsabschnitt (14) empfangen wurden und nur durch den bereitstellungsseitigen drahtlosen Kommunikationsabschnitt (13) empfangen wurden.

2. Bildanzeigesystem nach Anspruch 1,
wobei der anzeigeseitige Infrarotübertragungsabschnitt (24) die Aus-Daten an den bereitstellungsseitigen Infrarotempfangsabschnitt (14) zu vorbestimmten Zeitintervallen überträgt, und
wobei der bereitstellungsseitige Steuerabschnitt (16) die Stromversorgung auch zum bereitstellungsseitigen drahtlosen Kommunikationsabschnitt (13) unterbricht, wenn die Aus-Daten durch den bereitstellungsseitigen Infrarotempfangsabschnitt (14) zu den vorbestimmten Zeitintervallen in einem Fall empfangen wurden, bei welchem die Stromversorgung nur zum Datenempfangsabschnitt (11, 12) unterbrochen wird.

3. Bildanzeigesystem nach Anspruch 1,
wobei der anzeigeseitige Infrarotübertragungsabschnitt (24) die Aus-Daten an den bereitstellungsseitigen Infrarotempfangsabschnitt (14) zu vorbestimmten Zeitintervallen überträgt, und
wobei der bereitstellungsseitige Steuerabschnitt (16) die Stromversorgung zum bereitstellungsseitigen drahtlosen Kommunikationsabschnitt (13) aufnimmt, wenn die Aus-Daten nicht durch den bereitstellungsseitigen Infrarotempfangsabschnitt (14) zu den vorbestimmten Zeitintervallen in einem Fall empfangen wurden, bei welchem die Stromversorgung zum Datenempfangsabschnitt (11, 12) und zum bereitstellungsseitigen drahtlosen Kommunikationsabschnitt (13) unterbrochen wird.

4. Bildanzeigesystem nach Anspruch 1,
wobei die Bildbereitstellungsvorrichtung (1) weiterhin einen bereitstellungsseitigen Infrarotübertragungsabschnitt (18) enthält, um in einem Fall, bei welchem die Stromversorgung nur zum Datenerfassungsabschnitt (11, 12) unterbrochen wird, mittels drahtloser Kommunikation unter Verwendung von infrarotem Licht Daten zu übertragen, welche eine Abfrage anzeigen, ob der Strom zur Bildanzeigevorrichtung (2) aus ist oder nicht,
wobei die Bildanzeigevorrichtung (2) weiterhin einen anzeigeseitigen Infrarotempfangsabschnitt (28) enthält, um Daten zu empfangen, welche eine Abfrage anzeigen, dass vom bereitstellungsseitigen Infrarotübertragungsabschnitt (18) übertragen wird,
wobei der anzeigeseitige Infrarotübertragungsabschnitt (24) die Aus-Daten an den bereitstellungsseitigen Infrarotempfangsabschnitt (14) überträgt, wenn die Daten, welche eine Abfrage anzeigen, durch den anzeigeseitigen Infrarotempfangsabschnitt (28) empfangen wurden, und
wobei der bereitstellungsseitige Steuerabschnitt (16) die Stromversorgung auch zum bereitstellungsseitigen drahtlosen Kommunikationsabschnitt (13) unterbricht, wenn die Aus-Daten durch den bereitstellungsseitigen Infrarotempfangsabschnitt (14) empfangen wurden.

5. Bildanzeigesystem nach Anspruch 1,
wobei die Bildbereitstellungsvorrichtung (1) weiterhin einen bereitstellungsseitigen Infrarotübertragungsabschnitt (18) enthält, um in einem Fall, bei welchem die Stromversorgung zum Datenerfassungsabschnitt (11, 12) und zum bereitstellungsseitigen drahtlosen Kommunikationsabschnitt (13) unterbrochen wird, mittels drahtloser Kommunikation unter Verwendung von infrarotem Licht Daten zu übertragen, welche eine Abfrage anzeigen, ob der Strom zur Bildanzeigevorrichtung (2) aus ist oder nicht,
wobei die Bildanzeigevorrichtung (2) weiterhin einen anzeigeseitigen Infrarotempfangsabschnitt (28) enthält, um die Daten zu empfangen, welche eine Abfrage anzeigen, dass vom bereitstellungsseitigen Infrarotübertragungsabschnitt (18) übertragen wird,
wobei der anzeigeseitige Infrarotübertragungsabschnitt (24) die Aus-Daten an den bereitstellungsseitigen Infrarotempfangsabschnitt (14) überträgt, wenn die Daten, welche eine Abfrage anzeigen, durch den anzeigeseitigen Infrarotempfangsabschnitt (28) empfangen wurden, und
wobei der bereitstellungsseitige Steuerabschnitt (16) die Stromversorgung zum bereitstellungsseitigen drahtlosen Kommunikationsabschnitt (13) aufnimmt, wenn die Aus-Daten durch den bereitstellungsseitigen Infrarotempfangsabschnitt (14) nicht empfangen wurden.

6. Bildanzeigesystem nach Anspruch 1,
wobei der anzeigeseitige Steuerabschnitt (26) vorbestimmte An-Daten erzeugt, wenn ein Befehl den Strom anzuschalten an die Bildanzeigevorrichtung (2) gegeben wurde,
wobei der anzeigeseitige drahtlose Kommunikationsabschnitt (23) die An-Daten an den bereitstellungsseitigen drahtlosen Kommunikationsabschnitt (13) mittels drahtloser Kommunikation unter Verwendung von Funkwellen überträgt,
wobei der anzeigeseitige Infrarotübertragungsabschnitt (24) die An-Daten an den bereitstellungsseitigen Infrarotempfangsabschnitt (14) mittels drahtloser Kommunikation unter Verwendung von infrarotem Licht überträgt, und
wobei der bereitstellungsseitige Steuerabschnitt (16) die Stromversorgung zum Datenerfassungsabschnitt (11, 12) und zum bereitstellungsseitigen drahtlosen Kommunikationsabschnitt (13) aufnimmt, wenn die An-Daten durch den bereitstellungsseitigen Infrarotempfangsabschnitt (14) empfangen wurden, oder die Stromversorgung zum Datenerfassungsabschnitt (11, 12) aufnimmt, wenn die An-Daten nicht durch den bereitstellungsseitigen Infrarotempfangsabschnitt (14) empfangen wurden, und nur durch den bereitstellungsseitigen drahtlosen Kommunikationsabschnitt (13) empfangen wurden.

7. Bildanzeigesystem nach Anspruch 1,
wobei der anzeigeseitige Steuerabschnitt (26) vorbestimmte An-Daten erzeugt, wenn ein Befehl den Strom anzuschalten an die Bildanzeigevorrichtung (2) gegeben wurde,
wobei der anzeigeseitige Infrarotübertragungsabschnitt (24) die An-Daten an den bereitstellungsseitigen Infrarotempfangsabschnitt (14) mittels drahtloser Kommunikation unter Verwendung von infrarotem Licht überträgt, und
wobei der bereitstellungsseitige Steuerabschnitt (16) die Stromversorgung zum Datenerfassungsabschnitt (11, 12) und zum bereitstellungsseitigen drahtlosen Kommunikationsabschnitt (13) aufnimmt, wenn die An-Daten durch den bereitstellungsseitigen Infrarotempfangsabschnitt (14) empfangen wurden.

8. Bildbereitstellungsvorrichtung (1) zum Bereitstellen von Bilddaten an eine Bildanzeigevorrichtung (2) mittels drahtloser Kommunikation unter Verwendung von Funkwellen, wobei die Bildbereitstellungsvorrichtung (1) umfasst:
einen Datenerfassungsabschnitt (11, 12) zum Erfassen von an die Bildanzeigevorrichtung (2) bereitzustellenden Bilddaten;
einen bereitstellungsseitigen drahtlosen Kommunikationsabschnitt (13) zum Bereitstellen der durch den Datenerfassungsabschnitt (11, 12) erfassten Bilddaten an die Bildanzeigevorrichtung (2);
einen bereitstellungsseitigen Infrarotempfangsabschnitt (14) zum Empfangen vorbestimmter Aus-Daten, welche von der Bildanzeigevorrichtung (2) mittels drahtloser Kommunikation unter Verwendung von infrarotem Licht übertragen werden, wenn ein Befehl den Strom auszuschalten an die Bildanzeigevorrichtung (2) gegeben wurde;
**dadurch gekennzeichnet, dass** die Vorrichtung so angepasst ist, dass,
wenn ein Befehl den Strom auszuschalten an die Bildanzeigevorrichtung (2) gegeben wurde, die Bildanzeigevorrichtung (2) die Aus-Daten an den bereitstellungsseitigen drahtlosen Kommunikationsabschnitt (13) mittels drahtloser Kommunikation unter Verwendung von Funkwellen überträgt
und
die Bildanzeigevorrichtung (2) die Aus-Daten an den bereitstellungsseitigen Infrarotempfangsabschnitt (14) mittels drahtloser Kommunikation unter Verwendung von infrarotem Licht überträgt
und
der bereitstellungsseitige Steuerabschnitt (16) die Stromversorgung zum Datenerfassungsabschnitt (11, 12) und zum bereitstellungsseitigen drahtlosen Kommunikationsabschnitt (13) unterbricht, wenn die Aus-Daten durch den bereitstellungsseitigen Infrarotempfangsabschnitt (14) empfangen wurden,
und
der bereitstellungsseitige Steuerabschnitt (16) die Stromversorgung nur Datenerfassungsabschnitt (11, 12) unterbricht, wenn die Aus-Daten nicht durch den bereitstellungsseitigen Infrarotempfangsabschnitt (14) empfangen wurden und nur durch den bereitstellungsseitigen drahtlosen Kommunikationsabschnitt (13) empfangen wurden.

9. Bildanzeigevorrichtung (2) zum Anzeigen eines Bilds, welches durch eine Bildbereitstellungsvorrichtung (1) mittels drahtloser Kommunikation unter Verwendung von Funkwellen bereitgestellten Bilddaten entspricht, wobei die Bildanzeigevorrichtung (2) umfasst:
einen anzeigeseitigen drahtlosen Kommunikationsabschnitt (23) zum Empfangen von durch die Bildbereitstellungsvorrichtung (1) bereitgestellten Bilddaten;
einen Anzeigeabschnitt (21) zum Anzeigen eines Bilds, welches den durch den anzeigeseitigen drahtlosen Kommunikationsabschnitt (23) empfangenen Bilddaten entspricht;
einen anzeigeseitigen Steuerabschnitt (26), um, wenn ein Befehl den Strom auszuschalten an die Bildanzeigevorrichtung (2) gegeben wurde, die Aus-Daten zu erzeugen, welche verwendet werden, um eine Stromversorgung zu unterbrechen zu einem Datenerfassungsabschnitt (11, 12) der Bildbereitstellungsvorrichtung (1) zum Erfassen der an den anzeigeseitigen drahtlosen Kommunikationsabschnitt (23) bereitzustellenden Bilddaten und zu einem bereitstellungsseitigen drahtlosen Kommunikationsabschnitt (13) der Bildbereitstellungsvorrichtung (1) zum Bereitstellen der durch den Datenerfassungsabschnitt (11, 12) erfassten Bilddaten an den anzeigeseitigen drahtlosen Kommunikationsabschnitt (23);
einen anzeigeseitigen Infrarotübertragungsabschnitt (24) zum Übertragen der Aus-Daten an die Bildbereitstellungsvorrichtung (1) mittels drahtloser Kommunikation unter Verwendung von infrarotem Licht,
**dadurch gekennzeichnet, dass** die Vorrichtung so angepasst ist, dass,
wenn ein Befehl, den Strom auszuschalten an die Bildanzeigevorrichtung (2) gegeben wurde, der anzeigeseitige drahtlose Kommunikationsabschnitt (23) die Aus-Daten an den bereitstellungsseitigen drahtlosen Kommunikationsabschnitt (13) mittels drahtloser Kommunikation unter Verwendung von Funkwellen überträgt
und
der anzeigeseitige Infrarotübertragungsabschnitt (24) die Aus-Daten an die Bildbereitstellungsvorrichtung (1) mittels drahtloser Kommunikation unter Verwendung von infrarotem Licht überträgt
und
die Bildbereitstellungsvorrichtung (1) eine Stromversorgung zum Datenerfassungsabschnitt (11, 12) und zu dessen drahtlosem Kommunikationsabschnitt unterbricht, wenn die Aus-Daten vom anzeigeseitigen Infrarotübertragungsabschnitt (24) empfangen wurden
und
die Bildbereitstellungsvorrichtung (1) die Stromversorgung nur zum Datenerfassungsabschnitt (11, 12) unterbricht, wenn die Aus-Daten nicht vom anzeigeseitigen Infrarotübertragungsabschnitt (24) empfangen wurden und nur vom anzeigeseitigen drahtlosen Kommunikationsabschnitt (23) empfangen wurden.

## Revendications

1. Système d'affichage d'image comprenant un appareil de fourniture d'image (1) destiné à fournir des données d'image par le biais d'une communication sans fil en utilisant des ondes radio et un appareil d'affichage d'image (2) destiné à afficher une image correspondant aux données d'image fournies par l'appareil de fourniture d'image (1),
l'appareil d'affichage d'image (2) comportant :
une section (23) de communication sans fil côté affichage pour recevoir des données d'image fournies par l'appareil de fourniture d'image (1) ;
une section (21) d'affichage pour afficher une image correspondant aux données d'image reçues par la section (23) de communication sans fil côté affichage ;
une section (26) de commande côté affichage pour générer des données prédéterminées de mise hors tension lorsqu'on émet une instruction de mise hors tension de l'appareil d'affichage d'image (2); et
une section (24) de transmission infrarouge côté affichage pour transmettre les données de mise hors tension à l'appareil de fourniture d'image (1) par le biais d'une communication sans fil en utilisant une lumière infrarouge,
l'appareil de fourniture d'image (1) comportant :
une section (11, 12) d'acquisition de données pour acquérir les données d'image à fournir à la section (23) de communication sans fil côté affichage ;
une section (13) de communication sans fil côté fourniture pour fournir les données d'image acquises par la section (11, 12) d'acquisition de données à la section (23) de communication sans fil côté affichage ;
une section (14) de réception infrarouge côté fourniture pour recevoir les données de mise hors tension transmises de la section (24) de transmission infrarouge côté affichage ; et
une section (16) de commande côté fourniture,
**caractérisé en ce que** le système est adapté de façon à ce que,
lorsqu'on émet une instruction de mise hors tension de l'appareil d'affichage d'image (2), la section (24) de transmission infrarouge côté affichage transmette les données de mise hors tension à la section (14) de réception infrarouge côté fourniture par le biais d'une communication sans fil en utilisant une lumière infrarouge et
la section (23) de communication sans fil côté affichage transmette les données de mise hors tension à la section (13) de communication sans fil côté fourniture par le biais d'une communication sans fil en utilisant des ondes radio et
la section (16) de commande côté fourniture cesse l'alimentation électrique de la section (11, 12) d'acquisition de données et de la section (13) de communication sans fil côté fourniture lorsque les données de mise hors tension ont été reçues par la section (14) de réception infrarouge côté fourniture et
la section (16) de commande côté fourniture cesse l'alimentation électrique uniquement de la section (11, 12) d'acquisition de données lorsque les données de mise hors tension n'ont pas été reçues par la section (14) de réception infrarouge côté fourniture et ont été reçues uniquement par la section (13) de communication sans fil côté fourniture.

2. Système d'affichage d'image selon la revendication 1,
dans lequel la section (24) de transmission infrarouge côté affichage transmet les données de mise hors tension à la section (14) de réception infrarouge côté fourniture à des intervalles de temps prédéterminés, et
dans lequel la section (16) de commande côté fourniture cesse l'alimentation électrique également de la section (13) de communication sans fil côté fourniture lorsque les données de mise hors tension ont été reçues par la section (14) de réception infrarouge côté fourniture aux intervalles de temps prédéterminés dans le cas où l'alimentation électrique uniquement de la section (11, 12) d'acquisition de données est coupée.

3. Système d'affichage d'image selon la revendication 1,
dans lequel la section (24) de transmission infrarouge côté affichage transmet les données de mise hors tension à la section (14) de réception infrarouge côté fourniture à des intervalles de temps prédéterminés, et
dans lequel la section (16) de commande côté fourniture commence l'alimentation électrique de la section (13) de communication sans fil côté fourniture lorsque les données de mise hors tension n'ont pas été reçues par la section (14) de réception infrarouge côté fourniture aux intervalles de temps prédéterminés dans le cas où l'alimentation électrique de la section (11, 12) d'acquisition de données et de la section (13) de communication sans fil côté fourniture est coupée.

4. Système d'affichage d'image selon la revendication 1,
dans lequel l'appareil de fourniture d'image (1) comporte en outre une section (18) de transmission infrarouge côté fourniture pour, dans le cas où l'alimentation électrique uniquement de la section (11, 12) d'acquisition de données est coupée, transmettre, par le biais d'une communication sans fil en utilisant une lumière infrarouge, des données indiquant une demande qui consiste à savoir si l'alimentation de l'appareil d'affichage d'image (2) est coupée ou non,
dans lequel l'appareil d'affichage d'image (2) comporte en outre une section (28) de réception infrarouge côté affichage pour recevoir les données indiquant une demande qui est transmise de la section (18) de transmission infrarouge côté fourniture,
dans lequel la section (24) de transmission infrarouge côté affichage transmet les données de mise hors tension à la section (14) de réception infrarouge côté fourniture lorsque les données indiquant une demande ont été reçues par la section (28) de réception infrarouge côté affichage, et
dans lequel la section (16) de commande côté fourniture cesse l'alimentation électrique également à la section (13) de communication sans fil côté fourniture lorsque les données de mise hors tension ont été reçues par la section (14) de réception infrarouge côté fourniture.

5. Système d'affichage d'image selon la revendication 1,
dans lequel l'appareil de fourniture d'image (1) comporte en outre une section (18) de transmission infrarouge côté fourniture pour, dans le cas où l'alimentation électrique de la section (11, 12) d'acquisition de données et de la section (13) de communication sans fil côté fourniture est coupée, transmettre, par le biais d'une communication sans fil en utilisant une lumière infrarouge, des données indiquant une demande qui consiste à savoir si l'alimentation de l'appareil d'affichage d'image (2) est coupée ou non,
dans lequel le dispositif d'affichage d'image (2) comporte en outre une section (28) de réception infrarouge côté affichage pour recevoir les données indiquant une demande qui est transmise de la section (18) de transmission infrarouge côté fourniture,
dans lequel la section (24) de transmission infrarouge côté affichage transmet les données de mise hors tension à la section (14) de réception infrarouge côté fourniture lorsque les données indiquant une demande ont été reçues par la section (28) de réception infrarouge côté affichage, et
dans lequel la section (16) de commande côté fourniture commence l'alimentation électrique de la section (13) de communication sans fil côté fourniture lorsque les données de mise hors tension n'ont pas été reçues par la section (14) de réception infrarouge côté fourniture.

6. Système d'affichage d'image selon la revendication 1,
dans lequel la section (26) de commande côté affichage génère des données prédéterminées de mise sous tension lorsqu'on émet une instruction de mise sous tension de l'appareil d'affichage d'image (2),
dans lequel la section (23) de communication sans fil côté affichage transmet les données de mise sous tension à la section (13) de communication sans fil côté fourniture par le biais d'une communication sans fil en utilisant des ondes radio,
dans lequel la section (24) de transmission infrarouge côté affichage transmet les données de mise sous tension à la section (14) de réception infrarouge côté fourniture par le biais d'une communication sans fil en utilisant une lumière infrarouge, et
dans lequel la section (16) de commande côté fourniture commence l'alimentation électrique de la section d'acquisition de données (11, 12) et de la section (13) de communication sans fil côté fourniture lorsque les données de mise sous tension ont été reçues par la section (14) de réception infrarouge côté fourniture, ou commence l'alimentation électrique de la section d'acquisition de données (11, 12) lorsque les données de mise sous tension n'ont pas été reçues par la section (14) de réception infrarouge côté fourniture et ont été reçues uniquement par la section (13) de communication sans fil côté fourniture.

7. Système d'affichage d'image selon la revendication 1,
dans lequel la section (26) de commande côté affichage génère des données prédéterminées de mise sous tension lorsqu'on émet une instruction de mise sous tension de l'appareil d'affichage d'image (2),
dans lequel la section (24) de transmission infrarouge côté affichage transmet les données de mise sous tension à la section (14) de réception infrarouge côté fourniture par le biais d'une communication sans fil en utilisant une lumière infrarouge, et
dans lequel la section (16) de commande côté fourniture commence l'alimentation électrique de la section d'acquisition de données (11, 12) et de la section (13) de communication sans fil côté fourniture lorsque les données de mise sous tension ont été reçues par la section (14) de réception infrarouge côté fourniture.

8. Appareil de fourniture d'image (1) destiné à fournir des données d'image à un appareil d'affichage d'image (2) par le biais d'une communication sans fil en utilisant des ondes radio, l'appareil de fourniture d'image (1) comprenant :
une section d'acquisition de données (11, 12) pour acquérir des données d'image à fournir à l'appareil d'affichage d'image (2) ;
une section (13) de communication sans fil côté fourniture pour fournir les données d'image acquises par la section d'acquisition de données (11, 12) à l'appareil d'affichage d'image (2) ; une section (14) de réception infrarouge côté fourniture pour recevoir des données prédéterminées de mise hors tension transmises de l'appareil d'affichage d'image (2) par le biais d'une communication sans fil en utilisant une lumière infrarouge lorsqu'on émet une instruction de mise hors tension de l'appareil d'affichage d'image (2) ;
**caractérisé en ce que** l'appareil est adapté de façon à ce que,
lorsqu'on émet une instruction de mise hors tension de l'appareil d'affichage d'image (2), l'appareil d'affichage d'image (2) transmette les données de mise hors tension à la section (13) de communication sans fil côté fourniture par le biais d'une communication sans fil en utilisant des ondes radio et
l'appareil d'affichage d'image (2) transmette les données de mise hors tension à la section (14) de réception infrarouge côté fourniture par le biais d'une communication sans fil en utilisant une lumière infrarouge et
la section (16) de commande côté fourniture cesse l'alimentation électrique de la section (11, 12) d'acquisition de données et de la section (13) de communication sans fil côté fourniture lorsque les données de mise hors tension ont été reçues par la section (14) de réception infrarouge côté fourniture, et
la section (16) de commande côté fourniture cesse l'alimentation électrique uniquement de la section d'acquisition de données (11, 12) lorsque les données de mise hors tension n'ont pas été reçues par la section (14) de réception infrarouge côté fourniture et ont été reçues uniquement par la section (13) de communication sans fil côté fourniture.

9. Système d'affichage d'image (2) destiné à afficher une image correspondant à des données d'image fournies par un appareil de fourniture d'image (1) par le biais d'une communication sans fil en utilisant des ondes radio, l'appareil d'affichage d'image (2) comprenant :
une section (23) de communication sans fil côté affichage pour recevoir des données d'image fournies par l'appareil de fourniture d'image (1) ;
une section d'affichage (21) pour afficher une image correspondant aux données d'image reçues par la section (23) de communication sans fil côté affichage;
une section (26) de commande côté affichage pour, lorsqu'on émet une instruction de mise hors tension de l'appareil d'affichage d'image (2), générer des données de mise hors tension utilisées pour couper l'alimentation électrique à une section d'acquisition de données (11, 12) de l'appareil de fourniture d'image (1) afin d'acquérir les données d'image à fournir à la section (23) de communication sans fil côté affichage et à une section (13) de communication sans fil côté fourniture de l'appareil de fourniture d'image (1) afin de fournir les données d'image acquises par la section d'acquisition de données (11, 12) à la section (23) de communication sans fil côté affichage ; et
la section (24) de transmission infrarouge côté affichage pour transmettre les données de mise hors tension à l'appareil de fourniture d'image (1) par le biais d'une communication sans fil en utilisant une lumière infrarouge,
**caractérisé en ce que** l'appareil est adapté de façon à ce que,
lorsqu'on émet une instruction de mise hors tension de l'appareil d'affichage d'image (2), la section (23) de communication sans fil côté affichage transmette les données de mise hors tension à la section (13) de communication sans fil côté fourniture par le biais d'une communication sans fil en utilisant des ondes radio et
la section (24) de transmission infrarouge côté affichage transmette les données de mise hors tension à l'appareil de fourniture d'image (1) par le biais d'une communication sans fil en utilisant une lumière infrarouge et
l'appareil de fourniture d'image (1) cesse l'alimentation électrique de la section d'acquisition de données (11, 12) et à sa section de communication sans fil lorsque les données de mise hors tension ont été reçues de la section (24) de transmission infrarouge côté affichage et
l'appareil de fourniture d'image (1) cesse l'alimentation électrique uniquement de la section d'acquisition de données (11, 12) lorsque les données de mise hors tension n'ont pas été reçues de la section (24) de transmission infrarouge côté affichage et ont été reçues uniquement de la section (23) de communication sans fil côté affichage.
